# EUROPEAN PATENT APPLICATION

(11) **EP 4 783 292 A1**
(43) Date of publication of application: **29.07.2026**
(21) Application number: 25224547.7
(22) Date of filing: 17.12.2025
(51) Int. Cl.: H01M 10/0587, H01M 50/107, H01M 50/533, H01M 50/538, H01M 50/559, H01M 50/566

(54) **RECHARGEABLE BATTERY AND BATTERY PACK INCLUDING RECHARGEABLE BATTERY**

(30) Priority: 24.01.2025 KR 20250011127
(71) Applicant: SAMSUNG SDI CO., LTD., Yongin-si, Gyeonggi-do 17084 (KR)
(72) Inventor: LEE, Si Young, 16678 Suwon-si, Gyeonggi-do (KR); YOO, Kyeong Seon, 16678 Suwon-si, Gyeonggi-do (KR); HEO, Hoe Jun, 16678 Suwon-si, Gyeonggi-do (KR); ROH, Jae Hoon, 16678 Suwon-si, Gyeonggi-do (KR); YOON, Tae Jin, 16678 Suwon-si, Gyeonggi-do (KR); AN, Seong Bae, 16678 Suwon-si, Gyeonggi-do (KR)
(74) Representative: Bardehle Pagenberg Partnerschaft mbB Patentanwälte Rechtsanwälte

(57) **Abstract**

A rechargeable battery may include an electrode assembly wound around a core portion and a current collector plate located on at least one side of the electrode assembly and electrically connected to the electrode assembly. The current collector plate may include a first region in line with the core portion and having a first thickness and a second region in line with an outer portion of the electrode assembly and having a second thickness that may be less than the first thickness.

## Description

### BACKGROUND

### 1. Technical Field

The present disclosure relates to a rechargeable battery and a battery pack including the rechargeable battery.

### 2. Description of the Related Art

In general, with the recent proliferation of electronic devices using batteries, such as mobile phones, notebook computers, and electric vehicles, demand for rechargeable batteries having high energy density and high capacity has rapidly increased. Accordingly, research and development to improve the performance of rechargeable lithium batteries is being actively conducted.

The rechargeable batteries are batteries including a positive electrode and a negative electrode, each of which includes an active material capable of intercalation and deintercalation of lithium ions, and an electrolyte and generate electric energy through an oxidation-reduction reaction occurring when lithium ions are intercalated/deintercalated into/from the positive electrode and the negative electrode.

The rechargeable battery may be used in a single cell form or in the form of a battery module or a battery pack in which a plurality of rechargeable batteries is connected and bundled as a unit.

The above-described information disclosed in the background technology of the present disclosure is merely intended to improve an understanding of the background of the present disclosure and, thus, may include information that does not constitute related art.

### SUMMARY

One objective of the present disclosure is to provide a rechargeable battery in which adhesion between an electrode assembly and a current collector plate is improved and/or to provide a battery pack including the rechargeable battery.

Another objective of the present disclosure is to provide a rechargeable battery including a current collector plate corresponding to an electrode assembly and/or to provide a battery pack including the rechargeable battery.

However, embodiments of the present disclosure are not limited to solving the above-mentioned objectives, and other embodiments solving other objectives that are not mentioned above can be clearly understood by those skilled in the art from the following description.

According to some embodiments according to the present disclosure, a rechargeable battery may include an electrode assembly wound around a core portion and a current collector plate located on at least one side of the electrode assembly and electrically connected to the electrode assembly. The current collector plate may include a first region in line with the core portion and having a first thickness and a second region in line with an outer portion of the electrode assembly and having a second thickness that may be less than the first thickness.

In some embodiments, the electrode assembly may include a first electrode, a second electrode, and a separator located between the first electrode and the second electrode. Each of the first electrode and the second electrode may include a coated portion in which a coating layer may be provided on a substrate and an uncoated portion in which the substrate may be exposed, the uncoated portion extending from at least one side of the electrode assembly.

In some embodiments, the uncoated portion may be bent and may be joined to the current collector plate.

In some embodiments, a sum of a height of the uncoated portion and a thickness of the current collector plate is constant along a direction from the core portion to the outer portion of the electrode assembly.

In some embodiments, the first electrode may include a first coated portion and a first uncoated portion extending from one side of the electrode assembly. The second electrode may include a second coated portion and a second uncoated portion extending from another side of the electrode assembly.

In some embodiments, the current collector plate may include a first current collector plate located on the one side of the electrode assembly and joined to the first uncoated portion, which may be bent, and a second current collector plate located the other side of the electrode assembly and joined to the second uncoated portion, which may be bent.

In some embodiments, the second thickness may be 20% to 90% of the first thickness.

In some embodiments, the first thickness may be 0.5% to 2.5% of a width of the current collector plate.

In some embodiments, the first thickness may be greater than or equal to 0.1 mm and less than or equal to 0.5 mm.

In some embodiments, the second thickness may be greater than or equal to 0.2 mm and less than or equal to 0.45 mm.

In some embodiments, the first region and the second region may be connected such that the first region and second region form a streamlined geometry.

In some embodiments, the first region and the second region may be connected to each other and form a step.

In some embodiments, the current collector plate may be formed by stacking a plurality of plates.

In some embodiments, the plurality of plates may include a first plate and a second plate formed having larger area than the first plate.

In some embodiments, the first plate may be joined to the second plate by welding.

In some embodiments, the plurality of plates may include n plates located between the first plate and the second plate. n may be a natural number greater than or equal to 1 and less than or equal to 8.

In some embodiments, a thickness of at least one of the plurality of plates may be the second thickness.

According to some embodiments according to the present disclosure, a battery pack may include a plurality of rechargeable batteries and a housing accommodating the plurality of rechargeable batteries. Each of the plurality of rechargeable batteries may include an electrode assembly formed by being wound around a core portion and a current collector plate located on at least one side of the electrode assembly and electrically connected to the electrode assembly. The current collector plate may include a first region in line with the core portion and having a first thickness and a second region in line with an outer portion of the electrode assembly and having a second thickness that may be less than the first thickness.

In some embodiments, the electrode assembly may include a first electrode, a second electrode, and a separator located between the first electrode and the second electrode. Each of the first electrode and the second electrode may include a coated portion in which a coating layer may be provided on a substrate and an uncoated portion in which the substrate may be exposed, the uncoated portion extending from at least one side of the electrode assembly. The uncoated portion may be bent and may be joined to the current collector plate.

In some embodiments, a sum of a height of the uncoated portion and a thickness of the current collector plate is constant along a direction from the core portion to the outer portion of the electrode assembly.

### BRIEF DESCRIPTION OF THE DRAWINGS

The following drawings appended to the present specification are intended to illustrate exemplary embodiments of the present disclosure, and the spirit of the present disclosure will be more clearly understood from the accompanying drawings together with the following description of the invention, and thus illustrations in the drawings should not be construed as limiting the scope of the present disclosure, in which:
FIG. 1 is a perspective view schematically illustrating a rechargeable battery according to some embodiments of the present disclosure.
FIG. 2 is a cross-sectional view schematically illustrating a configuration of the rechargeable battery according to some embodiments of the present disclosure.
FIG. 3 is a perspective view schematically illustrating a rechargeable battery according to some embodiments of the present disclosure.
FIG. 4 is a cross-sectional view schematically illustrating a configuration of the rechargeable battery according to some embodiments of the present disclosure.
FIG. 5 is a top view schematically illustrating an electrode assembly and a current collector plate located on the electrode assembly according to some embodiments of the present disclosure.
FIG. 6 is a cross-sectional view schematically illustrating the electrode assembly and the current collector plate located on the electrode assembly.
FIG. 7 is a cross-sectional view schematically illustrating an electrode assembly and a current collector plate located on one side of the electrode assembly according to some embodiments of the present disclosure.
FIG. 8 is a view schematically illustrating a current collector plate according to some embodiments of the present disclosure.
FIG. 9 is a view schematically illustrating a current collector plate according to some embodiments of the present disclosure.
FIG. 10 is a view schematically illustrating a current collector plate according to some embodiments of the present disclosure.
FIG. 11 is a view schematically illustrating a current collector plate according to some embodiments of the present disclosure.
FIG. 12 is a cross-sectional view schematically illustrating an electrode assembly and current collector plates located on both sides of the electrode assembly according to some embodiments of the present disclosure.
FIG. 13 is a perspective view schematically illustrating a configuration of a battery pack according to some embodiments of the present disclosure.

### DETAILED DESCRIPTION

Hereinafter, exemplary embodiments of the present disclosure will be described in detail with reference to the accompanying drawings. Prior to this, the terms or words used in the present specification and claims should not be construed as being limited to ordinary or dictionary meanings and should be construed with meanings and concepts consistent with the technical spirit of the present disclosure based on the principle that an inventor can appropriately define concepts of terms to explain their invention in the best way. Therefore, the embodiments described herein and the configurations illustrated in the drawings are only some of the most preferred embodiments and are not representative of the full technical spirit of the present disclosure, and thus it should be understood that various equivalents and modifications may be made at the time of filing of the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, to help with understanding of the invention, the accompanying drawings may not be illustrated in actual scales. Rather, sizes of some components may be exaggerated. In addition, the same reference numerals may be assigned to the same components in different embodiments.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as "first" and "second" may be used to describe various components, but, of course, the components are not limited by the terms. These terms are merely used to distinguish one component from another. Unless particularly described otherwise, a first component may also be a second component.

Throughout the specification, unless particularly described otherwise, each component may be provided in a singular number or a plural number.

Arrangement of any configuration on an "upper portion (or lower portion)" of a component or "on (or below)" the component may mean not only that the configuration may be disposed in contact with an upper surface (or lower surface) of the component but also that another configuration may be interposed between the component and the configuration disposed on (or below) the component.

In addition, when it is described that a component is "on," "connected to," or "coupled to," another component, these components may be directly connected or coupled to each other, but it should be understood that still another component may be "interposed" between these components, or these components may be "connected," "coupled," or "joined" through still another component.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more of" and "at least one of" modify the entire list of elements and do not modify the individual elements of the list.

The expression "A and/or B" throughout the specification means A, B, or A and B, unless stated otherwise. The expression "C to D" means C or more and D or less, unless otherwise specified.

When a phrase such as "at least one of A, B and C," "at least one of A, B or C," "at least one selected from the group of A, B and C," or "at least one selected from among A, B and C" are used to designate a list of elements A, B and C, the phrase may refer to any and all suitable combinations or subsets of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree and are intended to account for the inherent variations in measured or calculated values that would be recognized by those of ordinary skill in the art.

It will be understood that, although the terms "first," "second," "third," or the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," or the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

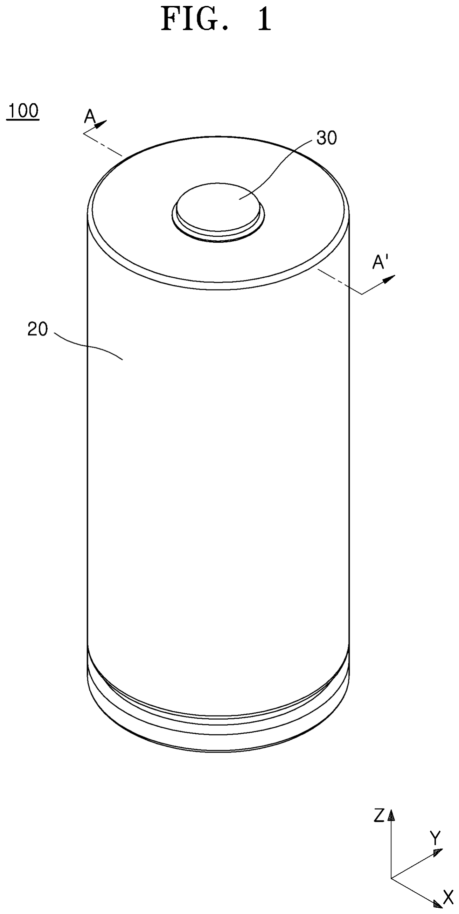

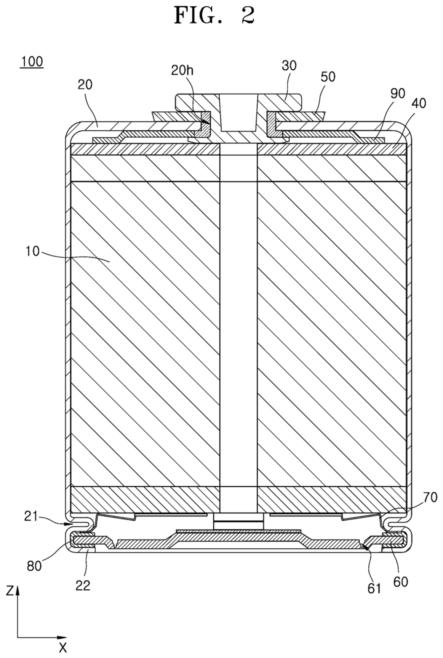

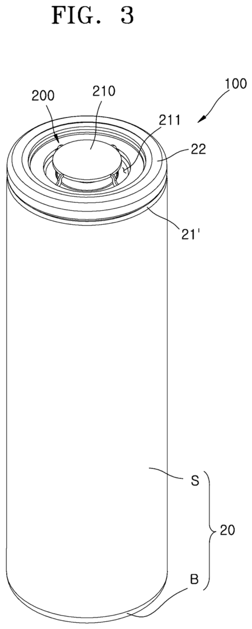

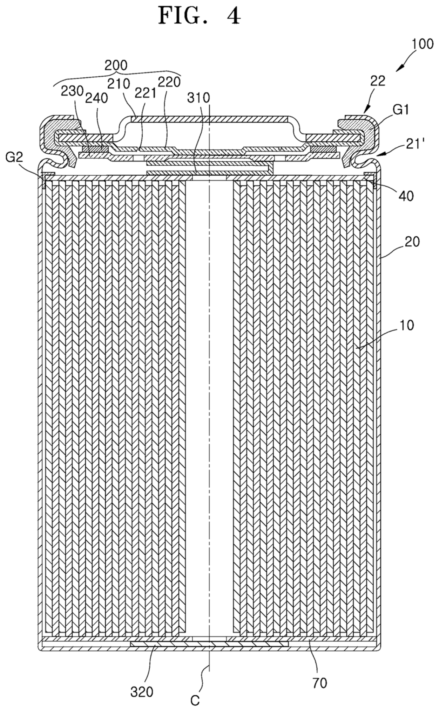

FIG. 1 is a perspective view schematically illustrating a rechargeable battery according to some embodiments of the present disclosure. FIG. 2 is a cross-sectional view schematically illustrating a configuration of the rechargeable battery according to some embodiments of the present disclosure. FIG. 3 is a perspective view schematically illustrating a rechargeable battery according to some embodiments of the present disclosure. FIG. 4 is a cross-sectional view schematically illustrating a configuration of the rechargeable battery according to some embodiments of the present disclosure.

The rechargeable battery 100 according to some embodiments of the present disclosure include an electrode assembly 10 and a case 20 accommodating the electrode assembly 10. In addition, the rechargeable battery 100 includes current collector plates 40 and 70 electrically connected to the electrode assembly 10.

However, the components of the rechargeable battery 100 are not limited to those illustrated in FIGS. 1 to 4, and the rechargeable battery 100 may include only some of the components shown in FIGS. 1 to 4 and/or may further include other components not shown in FIGS. 1 to 4.

However, the rechargeable battery 100 according to some embodiments of the present disclosure is not limited thereto and the rechargeable battery 100 may be a cylindrical battery, a lithium-polymer battery or a prismatic battery. Hereinafter, a case in which the rechargeable battery 100 is a cylindrical battery will be described as an example.

The electrode assembly 10 may function as a unit structure for performing a power charging and discharging operation in the rechargeable battery 100.

The electrode assembly 10 includes a first electrode and a second electrode. The first electrode is a positive electrode or a negative electrode. The second electrode is a negative electrode or a positive electrode and has a polarity opposite to that of the first electrode. Hereinafter, a case in which the first electrode is a positive electrode and the second electrode is a negative electrode will be described as an example.

In addition, the electrode assembly 10 may further include a separator interposed between the first electrode and the second electrode. The separator may prevent the first electrode and the second electrode from coming into contact with each other and may prevent a short circuit from occurring therebetween. The electrode assembly 10 may be formed by stacking the first electrode, the second electrode, and the separator disposed between the first electrode and the second electrode.

When the electrode assembly 10 is formed in a cylindrical geometry, a stacked structure including the first electrode, the second electrode, and the separator may be wound to form a jelly roll. The electrode assembly 10 may be wound around a winding axis in a clockwise or counterclockwise direction. A geometry of a cross section (e.g., a cross section parallel to an xy plane) of the electrode assembly 10 may be designed in various geometries such as an elliptical geometry, a polygonal geometry, or the like in addition to a circular geometry. The winding axis may refer to a straight line passing through a central portion of the electrode assembly 10.

Detailed descriptions of each component of the electrode assembly 10 are provided below.

### Positive electrode active material

As the positive electrode active material, a compound that is capable of reversible intercalation and deintercalation of lithium (a lithiated intercalation compound) may be used. Specifically, one or more of a composite oxide of lithium and a metal selected from cobalt, manganese, nickel, and a combination thereof may be used.

The composite oxide may be a lithium-transition metal composite oxide, and specific examples of the lithium-transition metal composite oxide may include a lithium nickel-based oxide, lithium cobalt-based oxide, a lithium manganese-based oxide, a lithium iron phosphate-based compound, a cobalt-free nickel-manganese-based oxide, or a combination thereof.

As an example, compounds represented by any one of the following chemical formulas may be used. LiₐA₁₋₃X₃O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn₃X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

**In** the above chemical formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol % based on 100 mol% of the metal excluding lithium in the lithium-transition metal composite oxide. The high-nickel-based positive electrode active material may be capable of realizing high capacity and can be applied to high-capacity and high-density lithium batteries.

### Positive electrode

The positive electrode for the rechargeable battery 100 may include a current collector plate and a positive electrode active material layer formed on the current collector plate. The positive electrode active material layer includes a positive electrode active material and may further include a binder and/or a conductive material.

As an example, the positive electrode may further include an additive that can serve as a sacrificial positive electrode.

A content of the positive electrode active material may range from 90 wt% to 99.5 wt% based on 100 wt% of the positive electrode active material layer, and a content of each of the binder and the conductive material may range from 0.5 wt% to 5 wt% based on 100 wt% of the positive electrode active material layer.

The binder serves to adhere positive electrode active material particles to each other well and also to adhere the positive electrode active material to the current collector plate well. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like, but the present disclosure is not limited thereto.

The conductive material is used to provide conductivity to the electrode, and any material that does not cause a chemical change and is electrically conductive may be used in the configured battery. Examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer such as a polyphenylene derivative; or a mixture thereof.

Al may be used as the current collector plate, but the present disclosure is not limited thereto.

### Negative electrode active material

The negative electrode active material includes a material that can reversibly intercalate/deintercalate lithium ions, a lithium metal, a lithium metal alloy, a material capable of doping and dedoping lithium, or a transition metal oxide.

The material capable of reversible intercalation and deintercalation of lithium ions is a carbon-based negative electrode active material and may include, for example, crystalline carbon, amorphous carbon, or a combination thereof. Examples of the crystalline carbon may include graphite such as amorphous, plate-shaped, flaky, spherical, or fibrous natural graphite or artificial graphite. Examples of the amorphous carbon may include soft carbon or hard carbon, a mesophase pitch carbonized product, calcined coke, or the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0<x<2), a Si-Q alloy (where Q is selected from an alkali metal, an alkaline-earth metal, a Group 13 element, a Group 14 element (excluding Si), a Group 15 element, a Group 16 element, a transition metal, a rare-earth element, or a combination thereof), and a combination thereof. The Sn-based negative electrode active material may be Sn, SnO₂, a Sn-based alloy, or a combination thereof.

The silicon-carbon composite may be a composite of silicon and amorphous carbon. According to some embodiments, the silicon-carbon composite may be in the form of silicon particles and amorphous carbon coated on the surface of the silicon particles. The silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, the silicon primary particles are coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

### Negative electrode

The negative electrode for the rechargeable battery 100 includes a current collector plate and a negative electrode active material layer located on the current collector plate. The negative electrode active material layer includes a negative electrode active material and may further include a binder and/or a conductive material.

The negative electrode active material layer may include 90 wt% to 99.5 wt% of the negative electrode active material, 0.5 wt% to 5 wt% of the binder, and 0 wt% to 5 wt% of the conductive material.

The binder serves to adhere negative electrode active material particles to each other well and also to adhere the negative electrode active material to the current collector plate well. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, and alkali metal salts may be used in combination. Na, K, or Li can be used as the alkali metal.

The dry binder is a polymer material capable of being fiberized and may be, for example, polytetrafluoroethylene, polyvinylidene fluoride, a polyvinylidene fluoride-hexafluoropropylene copolymer, a polyethylene oxide, or a combination thereof.

The conductive material is used to provide conductivity to the electrode, and any material that does not cause a chemical change and is electrically conductive may be used in the configured battery. Specific examples of the conductive material may include a carbon-based material such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

The negative electrode current collector plate may be selected from a copper foil, a nickel foil, a stainless-steel foil, a titanium foil, a nickel foam, a copper foam, a polymer substrate coated with a conductive metal, and a combination thereof.

### Separator

Depending on the type of the rechargeable battery 100, a separator may be present between the first electrode and the second electrode. The separator may include polyethylene, polypropylene, polyvinylidene fluoride, or a multilayer film of two or more layers thereof, and the separator may also include a mixed multilayer film such as a polyethylene/polypropylene two-layer separator; a polyethylene/polypropylene/polyethylene three-layer separator; a polypropylene/polyethylene/polypropylene three-layer separator; or the like.

The separator may include a porous substrate, and a coating layer including an organic material, an inorganic material, or a combination thereof located on one surface or both surfaces of the porous substrate.

The porous substrate may be a polymer film formed of any one polymer selected from polyolefins such as polyethylene, polypropylene, or the like, polyesters such as polyethylene terephthalate, polybutylene terephthalate, or the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g. teflon), or a copolymer or mixture of two or more of them.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the inorganic material is not limited thereto.

The organic and inorganic materials may be present by being mixed in one coating layer or may be present in a form in which a coating layer including organic materials and a coating layer including inorganic materials are stacked.

The case 20 accommodates the electrode assembly 10. The case 20 seals the accommodated electrode assembly 10 together with an electrolyte.

### Electrolyte

The electrolyte for the rechargeable battery 100 includes a non-aqueous organic solvent and a lithium salt.

The non-aqueous organic solvent serves as a medium through which ions involved in the electrochemical reaction of a battery can move.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), or the like.

The ester-based solvent may include methyl acetate, ethyl acetate, n-propyl acetate, dimethyl acetate, methyl propionate, ethyl propionate, decanolide, mevalonolactone, valerolactone, caprolactone, or the like.

The ether-based solvent may include dibutyl ether, tetraglyme, diglyme, dimethoxyethane, 2-methyltetrahydrofuran, 2,5-dimethyltetrahydrofuran, tetrahydrofuran, or the like. In addition, the ketone-based solvent may include cyclohexanone or the like. The alcohol-based solvent may include ethyl alcohol, isopropyl alcohol, or the like, and the aprotic solvent may include nitriles such as R-CN (where R is a C2 to C20 linear, branched, or cyclic hydrocarbon group and includes a double bond, an aromatic ring, or an ether bond), or the like; amides such as dimethyl formamide; dioxolanes such as 1,3-dioxolane and 1,4-dioxolane; sulfolanes; or the like.

The non-aqueous organic solvents may be used alone or in combinations of two or more.

In addition, when the carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a rechargeable battery, and improves the movement of the lithium ions between positive and negative electrodes. Representative examples of the lithium salt may include one or more selected from LiPF₆, LiBF₄, LiSbF₆, LiAsF₆, LiClO₄, LiAlO₂, LiAlCl₄, LiPOzFz, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{γ}F_{2γ+1}SO₂) (where x and y are integers of 1 to 20), lithium trifluoromethanesulfonate, lithium tetrafluoroethanesulfonate, lithium difluorobis(oxalato)phosphate (LiDFBOP), and lithium bis(oxalato)borate (LiBOB).

As described above, the case 20 is sealed after accommodating the electrode assembly 10 and the electrolyte.

As shown in FIGS. 1 and 2, the rechargeable battery 100 may further include a cap plate 60 that seals the case 20.

The case 20 forms a schematic exterior of the rechargeable battery 100. The case 20 may include an upper surface that forms an upper portion of the cylindrical geometry and a side surface that is connected to an outer circumference of the upper surface and extends vertically from the upper surface to form a side portion.

The case 20 may include a hole 20h formed in the upper surface of the case 20. The hole 20h passes through the upper surface of the case 20. The hole 20h may be located at a central portion of the upper surface of the case 20. The hole 20h may be formed above a core portion of the electrode assembly 10 so as to correspond to the core portion. The geometry of the hole 20h may correspond to the geometry of a rivet 30. For example, when a cross section of the rivet 30 has a circular geometry, a cross section of the hole 20h may also be formed in a circular geometry. A diameter of the cross section of the hole 20h is larger than a diameter of the cross section of the rivet 30.

The cylindrical case 20 may have an open lower portion. The inside of the case 20 may be sealed by closing the opening with the cap plate 60. However, unlike what is shown in FIG. 2, the case 20 may have a cylindrical geometry with an upper portion open. In addition, the opening of the case 20 may also be sealed by a cap assembly. Accordingly, the case 20 may prevent the electrolyte from leaking to an outside of the case and may protect the electrode assembly 10.

The case 20 may be formed of, for example, steel (e.g. stainless steel), aluminum, an aluminum alloy, a combination thereof, or an equivalent material.

The cap plate 60 seals the case 20 by covering the opening of the case 20.

The rechargeable battery 100 may further include a gasket 80 to ensure more reliable sealing of the case 20. The gasket 80 may be formed, for example, in a ring geometry. The gasket 80 may be located between the cap plate 60 and an inner circumferential surface of the case 20 while surrounding an outer circumferential surface of the cap plate 60. The gasket 80 may include a polymer. The gasket 80 may prevent the electrolyte inside the rechargeable battery 100 from leaking to the outside or causing safety issues.

A beading part 21 may be formed in the case 20 to fix the position of the cap plate 60 with respect to the opening of the case 20. The beading part 21 is formed on a lower portion of the case 20. The beading part 21 may be formed as the case 20 is inwardly indented from the outside. Due to the indented portion, the beading part 21 may prevent the cap plate 60 from being further inserted toward the inside of the case 20 at the opening of the case 20. A crimping part 22 may be further formed in the case 20 to fix the position of the cap plate 60 with respect to the opening of the case 20. The crimping part 22 may be formed by curling an end portion of the case 20 at the opening toward the inside of the case 20. The crimping part 22 may be formed by bending the end portion of the case 20 toward the inside of the case 20 after the cap plate 60 is placed at the opening of the case 20.

However, unlike what is shown in FIGS. 1 and 2, the case 20 may have a beadless structure that does not include the beading part 21 and/or the crimping part 22. The cap plate 60 may be connected to the case 20 through welding. Alternatively, an opening may be formed in the upper portion of the case 20, and the cap plate 60 or the cap assembly may be coupled to the opening of the case 20. Thus, the cap plate 60 may cover the opening of the case 20.

The cap plate 60 may simultaneously serve as a vent. The cap plate 60 may include a groove 61. The groove 61 may rupture when an internal pressure of the case 20 increases. Upon rupture, the groove 61 may release gas generated inside the case 20 to the outside.

Meanwhile, the case 20 may be electrically connected to the electrode assembly 10 accommodated in the case 20. The case 20 is electrically connected to the second electrode. The second electrode may be, for example, a negative electrode.

The case 20 may be electrically connected to the electrode assembly 10 through a second current collector plate 70.

The second current collector plate 70 is located below the electrode assembly 10. The second current collector plate 70 may be located between a lower portion of the electrode assembly 10 and an upper portion of the cap plate 60.

The second current collector plate 70 is electrically connected to the second electrode and collects current from the second electrode. The second current collector plate 70 is connected to a tab of the second electrode. In addition, the second current collector plate 70 is connected to the case 20. Accordingly, the case 20 may be electrically connected to the second electrode and may have a same polarity as the second electrode. The second current collector plate 70 is a negative electrode current collector plate. The case 20 may have a negative polarity.

The second current collector plate 70 and the cap plate 60 may be insulated from each other by the gasket 80. The second current collector plate 70 may extend between the gasket 80 and the case 20 and may be electrically connected to the case 20 while being electrically insulated from the cap plate 60.

The rivet 30 may be inserted into the hole 20h formed in the upper surface of the case 20. The rivet 30 may be inserted into the hole 20h and electrically connected to the electrode assembly 10 accommodated inside the case 20. The rivet 30 may be electrically connected to the first electrode. The first electrode may be, for example, a positive electrode.

The rechargeable battery 100 further includes a first current collector plate 40. The first current collector plate 40 may be located above the electrode assembly 10. The first current collector plate 40 may collect current by being connected to the first electrode. The first current collector plate 40 may be connected to a tab of the first electrode. In addition, the first current collector plate 40 may be connected to the rivet 30. Thus, the rivet 30 may be electrically connected to the first electrode and may have the same polarity as the first electrode. The first current collector plate 40 is a positive electrode current collector plate. The rivet 30 may have a positive polarity.

The rivet 30 may include a conductive material to be electrically connected to the first electrode. The rivet 30 may include a metal. The rivet 30 may include aluminum (Al).

As described above, the rivet 30 is connected to the first electrode. In addition, the case 20 is connected to the second electrode. The case 20 and the rivet 30 have different polarities from each other. When the case 20 and the rivet 30 come into contact with each other, a short circuit may occur between the case 20 and the rivet 30.

To prevent this issue, the rechargeable battery 100 may further include an insulator 50 that insulates between the case 20 and the rivet 30.

The insulator 50 is located below the rivet 30. In addition, the insulator 50 is located above the case 20. The insulator 50 may include an insulating material. The insulator 50 is located between the case 20 and the rivet 30 to provide insulation between the case 20 and the rivet 30. Accordingly, the insulator 50 prevents a short circuit from occurring between the case 20 and the rivet 30.

Meanwhile, the rechargeable battery 100 may further include an insulating layer 90. The insulating layer 90 may be provided on the first current collector plate 40. The insulating layer 90 prevents the first current collector plate 40 and the case 20 from being electrically connected to each other.

As shown in FIGS. 3 and 4, the rechargeable battery 100 may further include a cap assembly 200 that seals the case 20.

As shown in FIGS. 3 and 4, the case 20 according to some embodiments of the present disclosure may form the schematic exterior of the rechargeable battery 100. The case 20 may be electrically conductive. The case 20 may include at least one material selected from the group consisting of steel (e.g. stainless steel), aluminum, and an aluminum alloy. Accordingly, the case 20 can protect the electrode assembly 10 from external impact and perform a heat dissipation function to release heat generated during charging and discharging operations of the electrode assembly 10 to outside the case 20.

The case 20 may include a side wall part S, which has a cylindrical geometry and includes a central axis C formed at a central portion of the cylindrical geometry. The central axis C of the case 20 to be described below may refer to a central axis of the side wall part S. Both end portions of the side wall part S perpendicular to the central axis C of the case 20 may be open.

The case 20 may further include a bottom part B that closes a lower end portion of the side wall part S. The bottom part B according to some embodiments may have a substantially disk geometry and may face the lower end portion of the side wall part S. The bottom part B may be disposed perpendicular to the central axis C of the case 20. A circumference surface of the bottom part B may be coupled to the lower end portion of the side wall part S. The bottom part B may be integrally formed with the side wall part S by a drawing process or the like, or, alternatively, the bottom part B may be manufactured separately from the side wall part S and then coupled to the side wall part S by welding or the like.

The case 20 may further include an opening that opens an upper end portion of the side wall part S. The opening may function as a configuration that provides a path, through which the electrode assembly 10 to be described below is inserted into the interior of the case 20, on an upper end region of the case 20, and provides a space in which the cap assembly 200 can be installed. The opening may refer to an empty space surrounded by the upper end region of the side wall part S, which is located at a side opposite to the bottom part B.

The electrode assembly 10 may be disposed inside the case 20. The electrode assembly 10 may be inserted into the case 20 through the opening of the case 20.

The cap assembly 200 according to some embodiments of the present disclosure may be coupled to the case 20 and may seal the opening of the case 20.

The cap assembly 200 may be disposed at the upper end portion of the side wall part S, that is, at the opening. A beading part 21', which is concave toward the central axis C of the case 20, may be formed on the side wall part S. The beading part 21' may be disposed below the cap assembly 200 and may prevent the cap assembly 200 from being inserted into the case 20 beyond a set distance. A crimping part 22, which is formed by bending the upper end portion of the side wall part S toward the central axis C of the case 20, may be formed on an upper side of the beading part 21'. The crimping part 22 is disposed above the cap assembly 200 and may prevent the cap assembly 200 from being separated from the case 20.

A gasket G1 may be disposed between the case 20 and the cap assembly 200. The gasket G1 may function as a component that fixes a position of the cap assembly 200 in the opening by its own elastic restoring force, electrically insulates the case 20 and the cap assembly 200 from each other, and prevents moisture or electrolyte from entering or exiting between the case 20 and the cap assembly 200.

The gasket G1 may include insulating materials such as rubber, polyethylene (PE), polypropylene (PP), polyethylene terephthalate (PET), or the like. The gasket G1 may be formed in a substantially ring geometry and may be disposed on an inner side of the beading part 21' and/or the crimping part 22. An outer side surface of the gasket G1 may be in close contact with an inner side surface of the beading part 21' and/or the crimping part 22, and an inner side surface of the gasket G1 may be in close contact with an outer side surface of the cap assembly 200.

In addition, the gasket G1 may be disposed inside the beading part 21' and/or the crimping part 22.

The cap assembly 200 may be electrically connected to the first current collector plate 40 by a first electrode tab 310. Through this, the cap assembly 200 may be electrically connected to the first electrode. As the first current collector plate 40 functions as the positive electrode of the electrode assembly 10, the cap assembly 200 may function as a positive terminal of the rechargeable battery 100.

The cap assembly 200 may cut off electrical connection between the rechargeable battery 100 and an external device when an internal pressure of the case 20 increases due to an overcurrent or the like. The cap assembly 200 may rupture when the internal pressure of the case 20 increases above a set level, thereby allowing communication between spaces that are internal to the case 20 and spaces that are external to the case 20. Accordingly, the cap assembly 200 may reduce the risk of explosion of the rechargeable battery 100 in the event of an overcurrent.

The cap assembly 200 may include a vent plate 220. In addition, the cap assembly 200 may further include a lower cap 230 and/or an insulator 240. In addition, the cap assembly 200 may further include a upper cap 210.

The upper cap 210 forms the exterior of an upper side of the cap assembly 200 and may be disposed in the opening. The upper cap 210 may be electrically connected to the first current collector plate 40 by the lower cap 230 and the vent plate 220.

The upper cap 210 may have a disk geometry with a central portion that protrudes convexly upward. A central axis of the upper cap 210 may be coaxially aligned with the central axis C of the case 20. The central portion of the upper cap 210 may protrude to the outside of the case 20. An edge portion of the upper cap 210 may be disposed inside the case 20. A circumference surface of the edge portion of the upper cap 210 may be spaced apart from the inner side surface of the gasket G1 by a predetermined distance. The upper cap 210 may be made of electrically conductive materials such as nickel, aluminum, copper, or the like.

Upper cap holes 211 for discharging gas or the like generated inside the case 20 to the outside of the case 20 may be formed in the upper cap 210. The upper cap holes 211 may be formed as through-holes that pass through a circumferential surface of the central portion of the upper cap 210. A plurality of upper cap holes 211 may be provided. The plurality of upper cap holes 211 may be arranged at predetermined intervals along the circumferential surface of the central portion of the upper cap 210.

The lower cap 230 is disposed to face the upper cap 210 and may be electrically connected to the electrode assembly 10.

The lower cap 230 is formed to have a substantially disk geometry and may be disposed inside the case 20. The lower cap 230 may be disposed below the upper cap 210. The lower cap 230 may be disposed between the upper cap 210 and the electrode assembly 10. A central axis of the lower cap 230 may be disposed coaxially with the central axis C of the case 20. An upper surface of the lower cap 230 may be spaced apart from a lower surface of the upper cap 210.

The lower cap 230 may be made of electrically conductive materials such as nickel, aluminum, copper, or the like. The lower cap 230 may be electrically connected to the electrode assembly 10. As an example, an end portion of the first electrode tab 310 extending from the first current collector plate 40 may be connected to a lower side surface of the lower cap 230 by various types of coupling methods such as welding. The lower cap 230 may be electrically connected to the upper cap 210 by the vent plate 220.

The vent plate 220 may be disposed between the upper cap 210 and the lower cap 230. The vent plate 220 may provide an electrical conduction path between the upper cap 210 and the lower cap 230 during normal operation of the rechargeable battery 100. When an overcurrent occurs, the vent plate 220 may be deformed by a pressure of the gas generated inside the case 20 and may cut off the electrical connection between the upper cap 210 and the lower cap 230. The vent plate 220 ruptures when the internal pressure of the case 20 increases above a set level and may open a discharge path for the gas.

The vent plate 220 may have a substantially disk geometry. The vent plate 220 may be disposed such that both upper and lower surfaces of the vent plate 220 face the upper cap 210 and the lower cap 230, respectively. A central axis of the vent plate 220 may be disposed coaxially with the central axis C of the case 20. The vent plate 220 may be made of electrically conductive materials such as nickel, aluminum, copper, or the like.

Meanwhile, the cap assembly 200 may be formed in a manner in which the upper cap 210, the lower cap 230, and the insulator 240 are omitted. The vent plate 220 may serve as a terminal instead of the upper cap 210. The vent plate 220 may be connected to the first electrode and may serve as a first electrode terminal.

Alternatively, the cap assembly 200 may be formed in a manner in which only the upper cap 210 is omitted. The lower surface of the vent plate 220 may face the lower cap 230. In addition, the vent plate 220 may serve as a terminal instead of the upper cap 210. The vent plate 220 may be connected to the first electrode and serve as the first electrode terminal.

The insulator 240 may be disposed between the vent plate 220 and the lower cap 230.

The insulator 240 may have a hollow ring geometry. A central axis of the insulator 240 may be located coaxially with the central axis C of the case 20 and the central axis of the vent plate 220. An upper surface of the insulator 240 may be in contact with the lower surface of the vent plate 220, and a lower surface of the insulator 240 may be in contact with the upper surface of the lower cap 230. The insulator 240 may be formed of an insulating material such as polyethylene (PE), polypropylene (PP), or polyethylene terephthalate (PET).

In the event of an overcurrent, the vent plate 220 may deform around a hinge portion 221. For example, when an internal pressure of the case 20 increases due to the overcurrent, gas passing through the lower cap 230 may press the vent plate 220 upward, and the vent plate 220 may be deformed in a geometry in which its central portion protrudes upward convexly due to a change in a bending angle of the hinge portion 221.

When the vent plate 220 is deformed due to an increase in internal pressure of the case 20, the electrical connection between the lower cap 230 and the vent plate 220 may be cut off.

The first current collector plate 40 may be electrically connected to the cap assembly 200 by the first electrode tab 310.

The first current collector plate 40 may be located above the electrode assembly 10. The first current collector plate 40 may be located between the cap assembly 200 and an upper portion of the electrode assembly 10.

The first electrode tab 310 may be disposed above the first current collector plate 40, and both end portions of the first electrode tab 310 may be connected to the first current collector plate 40 and the cap assembly 200, respectively. The first electrode tab 310 may include a conductive metal material such as copper, a copper alloy, nickel, or a nickel alloy.

However, the first current collector plate 40 is not limited to the above configuration and may be directly connected to the cap assembly 200 without the first electrode tab 310.

Meanwhile, the first current collector plate 40 may be insulated from the case 20 by an insulator G2 that covers at least a portion of an outer circumferential surface of the first current collector plate 40.

The second current collector plate 70 may be electrically connected to the case 20 by a second electrode tab 320.

The second current collector plate 70 may be located below the electrode assembly 10. The second current collector plate 70 may be located between the lower portion of the electrode assembly 10 and the bottom part B of the case 20.

The second current collector plate 70 may be electrically connected to the second electrode and may collect current from the second electrode.

The second electrode tab 320 may be disposed below the second current collector plate 70, and both end portions of the second electrode tab 320 may be connected to the second current collector plate 70 and the bottom part B of the case 20, respectively. The second electrode tab 320 may include a conductive metal material such as copper, a copper alloy, nickel, or a nickel alloy.

However, the second current collector plate 70 is not limited to the above configuration and may be directly connected to the case 20 without the second electrode tab 320.

While FIGS. 1 to 4 show an example in which the rechargeable battery 100 includes the first current collector plate 40 and the second current collector plate 70, hereinafter, for convenience of description, the current collector plate will be described with reference to the first current collector plate 40. In addition, the current collector plate may be referred to by the reference numeral 40. However, the description of the current collector plate 40 provided below may be equally or similarly applied to the second current collector plate 70. Further, in the following description, the rechargeable battery 100 in the form illustrated in FIGS. 1 and 2 is exemplary for the description hereinafter. However, the current collector plates 40 and 70 according to some embodiments of the present disclosure may be applied to all types of rechargeable batteries, including those described in FIGS. 1 to 4. Furthermore, the current collector plates 40 and 70 according to some embodiments of the present disclosure may be equally or similarly applied to all types of rechargeable batteries that include a current collector plate.

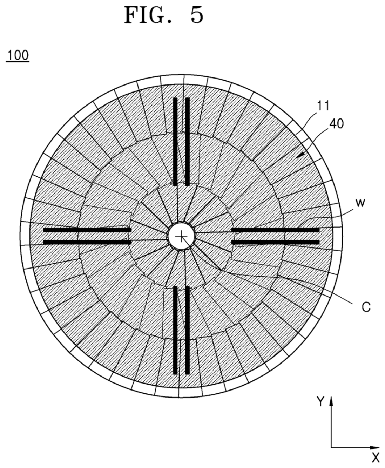

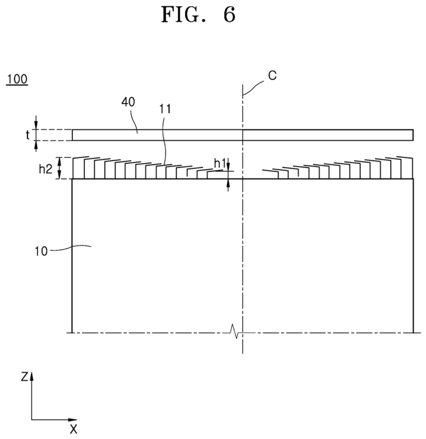

FIG. 5 is a top view schematically illustrating an electrode assembly and a current collector plate located on the electrode assembly according to some embodiments of the present disclosure. Particularly, FIG. 5 is a plan view of the inside of the rechargeable battery 100 and is a view illustrating the electrode assembly 10 and the current collector plate 40. FIG. 6 is a cross-sectional view schematically illustrating the electrode assembly and the current collector plate located on the electrode assembly. Particularly, FIG. 6 is a cross-sectional view of a portion of the rechargeable battery 100 taken along line A-A' of FIG. 1 and is an enlarged view illustrating only the electrode assembly 10 and the current collector plate 40.

The rechargeable battery 100 includes the electrode assembly 10 and the current collector plate 40 electrically connected to the electrode assembly 10.

The electrode assembly 10 includes electrodes including a first electrode and a second electrode. The electrodes are wound around a core portion c (e.g., including a winding axis) to form the electrode assembly 10. In other words, the electrode assembly 10 may be wound around the core portion c. The current collector plate 40 collects current from the electrodes.

Each electrode includes a substrate and a coating layer formed on a portion of the substrate. A region in which the coating layer is coated on the substrate may be referred to as a coated portion. In addition, a region in which the substrate is exposed to the outside since the coating layer is not coated on the substrate may be referred to as an uncoated portion.

The electrode may be formed such that the uncoated portion serves as a tab.

The uncoated portion may extend from one side of the wound electrode. A first uncoated portion, which is an uncoated portion of the first electrode, may extend from one side of the first electrode, and a second uncoated portion, which is an uncoated portion of the second electrode, may extend from the other side of the second electrode. The electrodes may be electrically connected to the outside through the uncoated portions, even without separate tabs being attached.

Alternatively, unlike what is shown in FIGS. 5 and 6, the electrodes may include separate tabs. In addition, the first electrode and the second electrode may include uncoated portions that extend in a same direction.

In the following description, a case will be described as an example in which the first electrode and the second electrode include uncoated portions extending in different directions, and the electrodes are electrically connected to the current collector plates through the respective uncoated portions.

Through the above-described structure, the electrode assembly 10 may include an uncoated portion 11 extending from one side of the electrode assembly 10.

The electrode assembly 10 is electrically connected to the current collector plate 40 as the uncoated portion 11 is electrically connected to the current collector plate 40.

The uncoated portion 11 may be bent to facilitate connection to the current collector plate 40. This bending process of the uncoated portion 11 may be referred to as a "pressing process." As illustrated in FIG. 6, the uncoated portion 11 may be bent toward the core portion c.

The uncoated portion 11 is bent through the pressing process. As the electrode is wound, bent regions of the uncoated portion 11 may overlap each other. The closer the uncoated portion 11 is to the core portion c, the less overlap may occur, and the farther the uncoated portion 11 is from the core portion c, the more overlap may occur.

Accordingly, as illustrated in FIG. 6, the bent uncoated portion 11 may exhibit variations in height depending on the position. The height refers to a distance in a z-axis direction.

The uncoated portion 11 located close to the core portion c may have a first height h1 while being bent. The first height hl refers to a height of the uncoated portion 11 located close to the core portion c, where the uncoated portion 11 is bent and overlapped with adjacent regions of the uncoated portion 11. In addition, the uncoated portion 11 located farther from the core portion c may have a second height h2 while being bent. The second height h2 is a height of the uncoated portion 11 located farther from the core portion c, where the uncoated portion 11 is bent and overlapped with adjacent regions of the uncoated portion 11. The second height h2 is greater than the first height h1.

As described above, the uncoated portion 11 may exhibit variations in height depending on the position of the uncoated portion 11 while being bent. The uncoated portion 11 may have different heights by the pressing process, depending on the distance from the core portion c.

Meanwhile, as illustrated in FIG. 6, the current collector plate 40 may have a uniform thickness t.

As described above, the bent uncoated portion 11 is joined to the current collector plate 40. The current collector plate 40 may be joined to the uncoated portion 11 by forming a weld portion w.

When the thickness t of the current collector plate 40 is uniform across positions but the height of the uncoated portion 11 varies depending on the position, a sum of the height of the uncoated portion 11 and the thickness of the current collector plate 40 may also vary depending on the position. Adhesion between the uncoated portion 11 and the current collector plate 40 may vary depending on the position of uncoated portion 11 with respect to the current collector plate 40. In order to join the uncoated portion 11 and the current collector plate 40 with a uniform bonding strength, different joining conditions may need to be applied depending on the position.

However, when the joining conditions are set depending on the position, both joining condition parameters and sensitivity to positional variation must be considered, which may lead to reduced accuracy. In addition, bonding uniformity may deteriorate depending on the position and/or poor welding may occur between the uncoated portion 11 and the current collector plate 40.

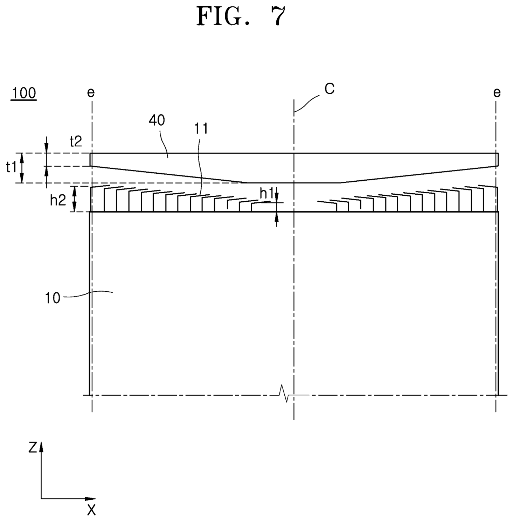

Hereinafter, a method for improving adhesion between the uncoated portion 11 and the current collector plate 40 will be described to address the above-described issues. FIG. 7 is a cross-sectional view schematically illustrating an electrode assembly and a current collector plate located on one side of the electrode assembly according to some embodiments of the present disclosure.

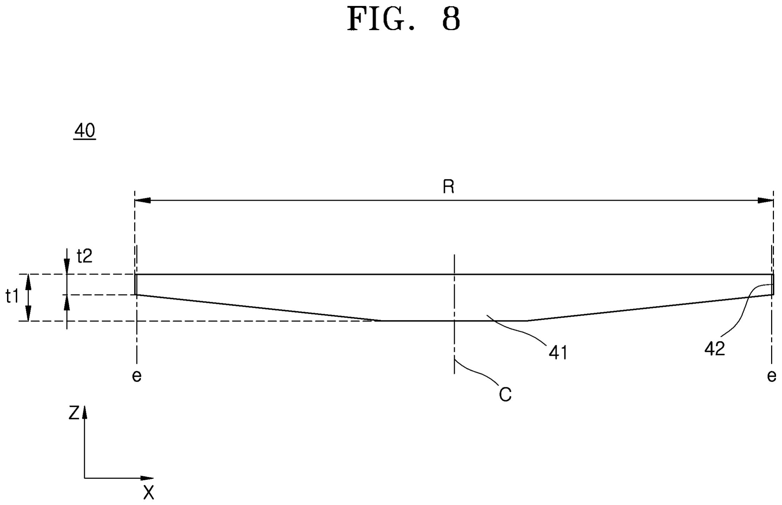

A rechargeable battery 100 (for example, including the rechargeable battery 100 described with reference to FIGS. 1 to 4) according to some embodiments of the present disclosure includes an electrode assembly 10 (for example, including the electrode assembly 10 described with reference to FIGS. 1 to 6) formed by being wound around a core portion c, and a current collector plate 40 located on at least one side of the electrode assembly 10 and electrically connected to the electrode assembly 10. The current collector plate 40 may include a first region 41 (see FIG. 8), corresponding to (e.g., in line with) the core portion c and having a first thickness t1, and the current collector plate 40 may include a second region 42 (see FIG. 8) corresponding to (e.g., in line with) an outer portion e of the electrode assembly 10 and formed with a second thickness t2 that is less than the first thickness t1.

FIG. 7 is a cross-sectional view of a portion of the rechargeable battery 100 taken along line A-A' of FIG. 1 and is an enlarged view illustrating an upper portion of the electrode assembly 10 and the current collector plate 40.

As illustrated in FIG. 7, the rechargeable battery 100 includes the electrode assembly 10 and the current collector plate 40 that is electrically connected to the electrode assembly 10.

The electrode assembly 10 includes electrodes including a first electrode and a second electrode, and a separator located between the first electrode and the second electrode. The electrode assembly 10 is formed by winding the electrodes and the separator around the core portion c. The electrode assembly 10 may be wound around the core portion c in a clockwise or counterclockwise direction. The electrode assembly 10 may be formed in a geometry of a jelly roll.

Each electrode may include a substrate and a coating layer formed on a portion of the substrate. A region in which the coating layer is coated on the substrate may be referred to as a coated portion. In addition, a region in which the substrate is exposed (i.e., when the coating layer is not coated on the substrate) may be referred to as an uncoated portion. Accordingly, each electrode includes a coated portion in which the coating layer is provided on the substrate, and an uncoated portion 11 in which the substrate is exposed and which extends from at least one side of the electrode assembly 10. Each electrode may be elongated in the longitudinal direction, and the coated portion and the uncoated portion 11 may be disposed parallel to the longitudinal direction.

The uncoated portion 11 may serve as a tab of each electrode. Each electrode may be electrically connected to an outside (e.g., to the current collector plate 40) through the uncoated portion 11.

Each electrode may be wound around the core portion c where each electrode is elongated in the longitudinal direction. Accordingly, the uncoated portion 11 extends from one side of each electrode. The uncoated portion 11 may extend from one side of the electrode assembly 10. The uncoated portion 11 of the first electrode may extend upward from the electrode assembly 10.

However, unlike what is shown in FIG. 7, each electrode may include a separate tab. The tab extends from one side of each electrode. The tab may extend upward from the electrode assembly 10. Hereinafter, a case in which each electrode does not include a separate tab and is electrically connected to the outside through the uncoated portion 11 will be described as an example, but the present disclosure is not limited thereto.

As each electrode is wound, the uncoated portion 11 includes a region relatively close to the core portion c of the jelly roll geometry and a region relatively close to the outer portion e of the jelly roll geometry.

The uncoated portion 11 may be bent through a pressing process. The uncoated portion 11 may be bent in a direction toward the core portion c. While being bent, at least a portion of the uncoated portion 11 may overlap adjacent regions of the uncoated portion 11.

In the bent uncoated portion 11, the region located relatively close to the core portion c of the jelly roll geometry may be formed with a first height h1. In addition, in the bent uncoated portion 11, the region located relatively close to the outer portion e of the jelly roll geometry may be formed with a second height h2. The second height h2 is greater than the first height h1. The bent uncoated portion 11 may have a directional height that increases toward the outer portion e from the core portion c of the jelly roll geometry. As described above, the uncoated portion 11 may be bent at different heights depending on the position from the core portion c.

The current collector plate 40 is joined to the uncoated portion 11 and collects current from each electrode. The current collector plate 40 may be located adjacent to the electrode assembly 10. The current collector plate 40 may be located on one side of the electrode assembly 10 and may be joined to the uncoated portion 11. The current collector plate 40 may be electrically connected to the bent uncoated portion 11 by welding.

The current collector plate 40 is joined to the uncoated portion 11. In order to improve adhesion to the uncoated portion 11, the current collector plate 40 is formed with a non-uniform thickness. The thickness of the current collector plate 40 refers to a distance in the z-axis direction. The current collector plate 40 may be formed with different thicknesses depending on a position of the current collector plate 40. The current collector plate 40 may be formed with a thickness inversely proportional to the height of the uncoated portion 11.

The region of the current collector plate 40 located relatively close to the core portion c of the jelly roll geometry may be formed with the first thickness t1. In addition, the region of the current collector plate 40 located relatively close to the outer portion e of the jelly roll geometry may be formed with the second thickness t2. The second thickness t2 is less than the first thickness t1. The current collector plate 40 may have a directional height that decreases toward the outer portion e from the core portion c of the jelly roll geometry. The current collector plate 40 may become thinner either continuously or discontinuously from the core portion c toward the outer portion e. In this manner, the current collector plate 40 may be formed with different thicknesses at respective positions depending on the distance from the core portion c of the jelly roll geometry.

One surface of the current collector plate 40 may be have a uniform height, and the other surface of the current collector plate 40 may have non-uniform heights. The other surface may be the surface of the current collector plate 40 facing the electrode assembly 10. As illustrated in FIG. 7, the current collector plate 40 may have one surface (e.g., an upper surface) formed as a flat plane, and the other surface (e.g., a lower surface) formed with a greater thickness toward the central portion. Accordingly, the other surface of the current collector plate 40 may be formed in a convex geometry. However, the geometry of the current collector plate 40 is not limited thereto, and, for example, both surfaces of the current collector plate 40 may be formed in convex geometries. The current collector plate 40 may be formed in any geometry as long as the surface facing the electrode assembly 10 corresponds to the height of the uncoated portion 11.

A sum of the height of the uncoated portion 11 and the thickness of the current collector plate 40 yields the same value at any point along a direction from the core portion c to the outer portion e of the electrode assembly. A sum of the height of the uncoated portion 11 and the thickness of the current collector plate 40 may be uniformly formed from the core portion c toward the outer portion e of the electrode assembly 10. The sum of the thicknesses of the joined uncoated portion 11 and the current collector plate 40 may be referred to as a thickness of a joint portion.

The thickness of the joint portion may be uniform. For example, in the joint portion, a region located relatively close to the core portion c may be referred to as a first joint portion, and a region located relatively close to the outer portion e may be referred to as a second joint portion.

A thickness of the first joint portion may be expressed as a sum of the first height h1 and the first thickness t1. In addition, a thickness of the second joint portion may be expressed as a sum of the second height h2 and the second thickness t2. The thicknesses of the first joint portion and the second joint portion are equal to each other. The term "equal" may include values within a tolerance range of ±5%.

As the current collector plate 40 is formed with a non-uniform thickness, the thickness of the joint portion may be formed uniformly. The current collector plate 40 may be in close contact with the bent uncoated portion 11 regardless of the position of the current collector plate 40. In addition, since the surface of the current collector plate 40 facing the electrode assembly 10 corresponds to the height of the uncoated portion 11, the current collector plate 40 may be self-aligned on the uncoated portion 11. Accordingly, positional misalignment of the current collector plate 40 with respect to the electrode assembly 10 may be minimized, and joining conditions with the electrode assembly 10 may be simplified.

With this structure, some embodiments of the present disclosure may provide the rechargeable battery 100 in which adhesion between the uncoated portion 11 and the current collector plate 40 is increased and welding defects are reduced.

FIG. 8 is a view schematically illustrating a current collector plate according to some embodiments of the present disclosure.

A rechargeable battery 100 according to some embodiments of the present disclosure (e.g., including the rechargeable battery 100 described with reference to FIGS. 1 to 4) includes an electrode assembly 10 (e.g., including the electrode assembly 10 described with reference to FIGS. 1 to 7) formed by being wound around a core portion c, and a current collector plate 40 (e.g., including the current collector plate 40 described with reference to FIGS. 1 to 4 and 7) located on at least one side of the electrode assembly 10 and electrically connected to the electrode assembly 10.

The current collector plate 40 includes a first region 41 corresponding to the core portion c and formed with a first thickness t1, and a second region 42 corresponding to the outer portion e of the electrode assembly 10 and formed with a second thickness t2 that is less than the first thickness t1. The first thickness t1 may represent the greatest thickness of the current collector plate 40. In addition, the second thickness t2 may represent the smallest thickness of the current collector plate 40.

The current collector plate 40 includes the first region 41 and the second region 42.

The first region 41 is located relatively close to the core portion c of the electrode assembly 10. The first region 41 corresponds to the core portion c of the electrode assembly 10. The first region 41 is formed with the first thickness t1.

The second region 42 is located relatively far from the core portion c of the electrode assembly 10 and is located relatively close to the outer portion e of the electrode assembly 10. The second region 42 corresponds to the outer portion e of the electrode assembly 10. The second region 42 is formed with the second thickness t2. The second thickness t2 is less (thinner) than the first thickness t1.

Meanwhile, a region of the current collector plate 40 corresponding to the core portion c of the electrode assembly 10 may be uniformly formed with the first thickness t1, the region being an empty space in which no electrode is located. A central portion of the current collector plate 40 may have a uniform thickness and a flat geometry.

The second thickness t2 is from about 20% to about 90% of the first thickness t1. Alternatively, the second thickness t2 is from about 25% to about 90% of the first thickness t1. Alternatively, the second thickness t2 ranges from about 20% to about 85% of the first thickness t1. Alternatively, the second thickness t2 is from about 25% to about 85% of the first thickness t1.

When the second thickness t2 is less than 20% of the first thickness t1, the second thickness t2 may become excessively thin, thereby making it difficult to form the second region 42 with a desired thickness. Alternatively, controlling the tolerance of the second thickness t2 may be difficult. In addition, when the second thickness t2 is greater than 90% of the first thickness t1, the thicknesses of the first region 41 and the second region 42 may become similar to each other, and a thickness of a joint portion may not be uniformly maintained. Adhesion between the current collector plate 40 and the uncoated portion 11 may decrease, and welding defects may increase. Thus, it is preferable that the second thickness t2 is from about 20% to about 90% of the first thickness t1.

In FIG. 8, R represents a width of the current collector plate 40. For example, when the current collector plate 40 is formed in a circular geometry in a plan view, the width R of the current collector plate 40 refers to a diameter of the current collector plate 40.

The first thickness t1 is from about 0.5% to about 2.5% of the width R of the current collector plate 40. Alternatively, the first thickness t1 is from about 1.0% to about 2.5% of the width R of the current collector plate 40. Alternatively, the first thickness t1 is from about 0.5% to about 2.0% of the width R of the current collector plate 40. Alternatively, the first thickness t1 is from about 1.0% to about 2.0% of the width R of the current collector plate 40.

When the first thickness t1 is less than 0.5% of the width R of the current collector plate 40, it may be difficult to form or maintain the geometry of the current collector plate 40. In addition, when the first thickness t1 is greater than 2.5% of the width R of the current collector plate 40, capacity efficiency of the rechargeable battery 100 may be reduced due to the current collector plate 40. Thus, it is preferable that the first thickness t1 is 0.5% to 2.5% of the width R of the current collector plate 40.

The first thickness t1 may be greater than or equal to 0.1 mm. Alternatively, the first thickness t1 may be greater than or equal to 0.2 mm. When the first thickness t1 is less than 0.1 mm, the second thickness t2, which is less than the first thickness t1, may become excessively thin, and, therefore, it may be difficult to manage tolerance of the current collector plate 40. Thus, it is preferable that the first thickness t1 is greater than or equal to 0.1 mm.

In addition, the first thickness t1 may be less than or equal to 0.5 mm. Alternatively, the first thickness t1 may be less than or equal to 0.4 mm. When the first thickness t1 is greater than 0.5 mm, the overall height of the rechargeable battery 100 may increase due to the current collector plate 40, resulting in a decrease in process efficiency and/or capacity efficiency of the rechargeable battery 100.

The second thickness t2 may be greater than or equal to 0.02 mm. When the second thickness t2 is less than 0.02mm, the second thickness t2 becomes excessively thin. It may be difficult to manage the tolerance of the current collector plate 40. Thus, it is preferable that the second thickness t2 is greater than or equal to 0.02 mm.

In addition, the second thickness t2 may be less than or equal to 0.45 mm. When the second thickness t2 is greater than 0.45 mm, the first thickness t1, which is greater than the second thickness t2, becomes excessively thick. The overall height of the rechargeable battery 100 may increase due to the current collector plate 40, resulting in a decrease in process efficiency and/or capacity efficiency of the rechargeable battery 100.

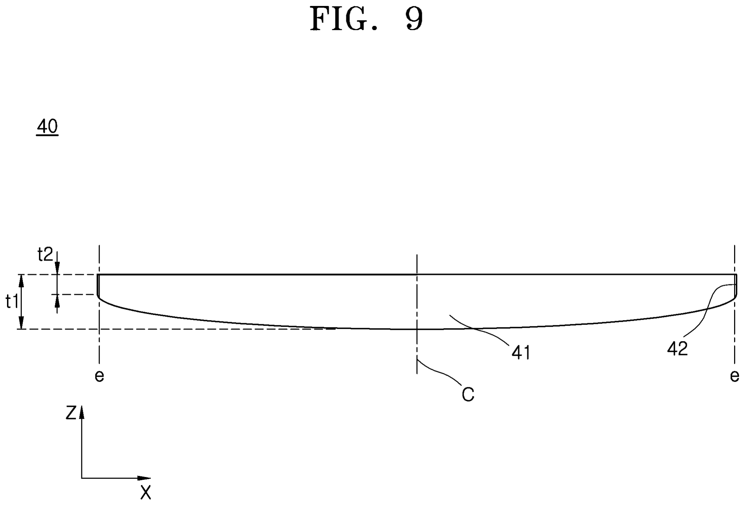

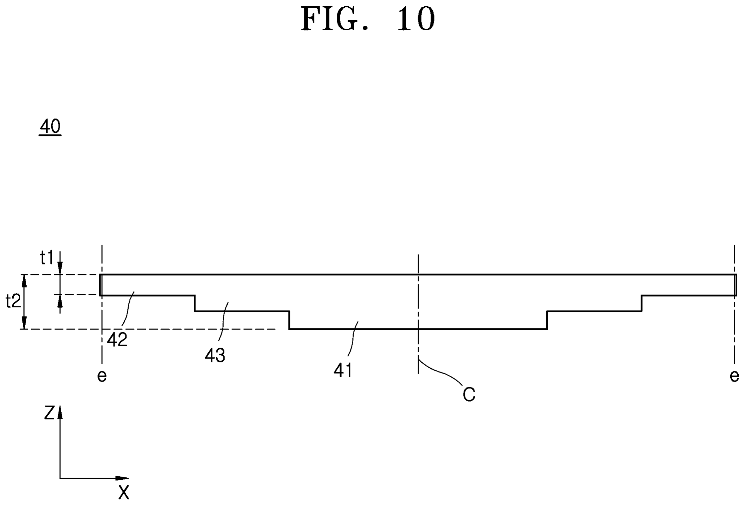

FIG. 9 is a view schematically illustrating a current collector plate according to some embodiments of the present disclosure. FIG. 10 is a view schematically illustrating a current collector plate according to some embodiments of the present disclosure.

A rechargeable battery 100 according to some embodiments of the present disclosure (e.g., including the rechargeable battery 100 described with reference to FIGS. 1 to 4) includes an electrode assembly 10 (e.g., including the electrode assembly 10 described with reference to FIGS. 1 to 7) formed by electrodes and a separator being wound around a core portion c, and a current collector plate 40 (e.g., including the current collector plate 40 described with reference to FIGS. 1 to 4, 7, and 8) located on at least one side of the electrode assembly 10 and electrically connected to the electrode assembly 10.

The current collector plate 40 includes a first region 41 corresponding to the core portion c of the electrode assembly 10 and formed with a first thickness t1, and a second region 42 corresponding to the outer portion e of the electrode assembly 10 and formed with a second thickness t2 that is less than the first thickness t1.

As described with reference to FIG. 7, the current collector plate 40 may be formed such that one surface has a uniform height and the other surface has varying heights. Accordingly, the current collector plate 40 may be formed with thicknesses that varies depending on the position of the current collector plate 40. The current collector plate 40 may include the first region 41 formed with the first thickness t1 and the second region 42 formed with the second thickness t2. The first thickness t1 is greater than the second thickness t2. The first thickness t1 may be a thickness of a region of the current collector plate 40 having the greatest thickness. In addition, the second thickness t2 may be a thickness of a region of the current collector plate 40 having the smallest thickness.

As described above, the current collector plate 40 may be formed in various geometries, with thicknesses varying depending on the position of the current collector plate 40. The current collector plate 40 may be formed in various geometries as long as a central portion corresponding to the core portion c of the electrode assembly 10 is relatively thick, and an outer portion corresponding to the outer portion e of the electrode assembly 10 is relatively thin.

As illustrated in FIG. 9, the first region 41 and the second region 42 are connected in a streamlined geometry, for example, smoothly connected in a streamlined geometry. For example, one surface of the current collector plate 40 may be flat, and the other surface the current collector plate 40 may be formed in a streamlined curved geometry. The current collector plate 40 may have a convex semicircular geometry when viewed from the side (or the front). A lower surface of the current collector plate 40 facing the electrode assembly 10 may be formed in a convex semicircular geometry. The first region 41 may be located at the central portion of the current collector plate 40. In addition, the second region 42 may be located at the outer portion of the current collector plate 40. With this structure, some embodiments of the present disclosure may provide the current collector plate 40, which is easy to manufacture and exhibits high adhesion to the uncoated portion 11.

Alternatively, as illustrated in FIG. 10, the first region 41 and the second region 42 are connected to each other while forming a step. For example, one surface of the current collector plate 40 may be formed as a flat surface, and the other surface the current collector plate 40 may be formed as a step-shaped surface. The current collector plate 40 may be formed in a pyramid geometry when viewed from the side (or the front). The lower surface of the current collector plate 40 facing the electrode assembly 10 may be formed in an inverted pyramid geometry with steps. The first region 41 may be located at the central portion of the current collector plate 40. In addition, the second region 42 may be located at the outer portion of the current collector plate 40.

Meanwhile, the current collector plate 40 may include two or more layers. The current collector plate 40 may further include a third region 43 located between the first region 41 and the second region 42. The third region 43 may be formed with a thickness less than the first thickness t1 and greater than the second thickness t2. Furthermore, the current collector plate 40 may further include 0 to 8 regions between the first region 41 and the second region 42. The current collector plate 40 may be formed in a multi-step geometry having 2 to 10 steps. With this structure, some embodiments of the present disclosure may provide the current collector plate 40 that exhibits high adhesion to the uncoated portion 11 and that improves bonding uniformity between the current collector plate 40 and the uncoated portion 11 and accuracy with respect to connectivity between components of the rechargeable battery 100.

As described above, by being formed with a non-uniform thickness, the current collector plate 40 may improve adhesion to the electrode assembly 10 and may improve the safety of the rechargeable battery 100.

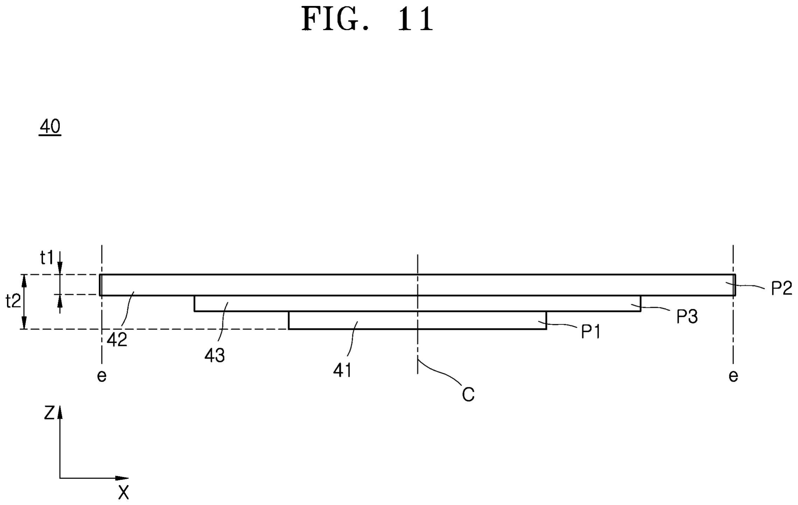

FIG. 11 is a view schematically illustrating a current collector plate according to some embodiments of the present disclosure.

A rechargeable battery 100 according to some embodiments of the present disclosure (e.g., including the rechargeable battery 100 described with reference to FIGS. 1 to 4) includes an electrode assembly 10 (e.g., including the electrode assembly 10 described with reference to FIGS. 1 to 7) formed by winding around a core portion c, and a current collector plate 40 (e.g., including the current collector plate 40 described with reference to FIGS. 1 to 4 and 7 to 10) located on at least one side of the electrode assembly 10 and electrically connected to the electrode assembly 10.

The current collector plate 40 includes a first region 41 corresponding to the core portion c of the electrode assembly 10 and formed with a first thickness t1, and a second region 42 corresponding to the outer portion e of the electrode assembly 10 and formed with a second thickness t2 that is less than the first thickness t1.

The current collector plate 40 may be a single structure. The current collector plate 40 may be a single structure formed by a mold. The current collector plate 40 may be a single structure formed by a casting or forging process. The geometry of the current collector plate 40 may be easily manufactured.

Alternatively, the current collector plate 40 may be formed by stacking a plurality of plates. The current collector plate 40 may be formed by stacking a plurality of plates (e.g., P1, P2, and P3). The plurality of plates (e.g., P1, P2, and P3) may be joined together by welding. The current collector plate 40 may allow more flexibility in thickness implementation.

The plurality of plates may include a first plate P1 and a second plate P2 having a larger area than the first plate P1.

Unlike what is shown in FIG. 11, the first plate P1 and the second plate P2 may be joined by welding while in contact with each other. The current collector plate 40 may be formed in a stepped geometry having two steps.

Alternatively, as shown in FIG. 11, the plurality of plates may include n plates located between the first plate P1 and the second plate P2, where n is a natural number ranging from 1 to 8. The current collector plate 40 may include the first plate P1, the second plate P2, and a third plate P3 located between the first plate P1 and the second plate P2. The first plate P1 may be formed with a larger area than the third plate P3. In addition, the third plate P3 may be formed with a larger area than the second plate P2. The current collector plate 40 may be formed in a stepped geometry having three or more steps.

At least one of the plurality of plates (e.g., P1, P2, and P3) may be formed with the second thickness t2. All of the plurality of plates (e.g., P1, P2, and P3) may be formed with a same thickness. A total thickness of the plurality of plates (e.g., P1, P2, and P3) may correspond to (i.e. be the same as) the first thickness t1. One or more of the plurality of plates (e.g., P1, P2, and P3) may be formed with different thicknesses. Accordingly, the current collector plate 40 may be formed in a geometry corresponding to the height of the uncoated portion 11, while minimizing a number of plates used for bonding.

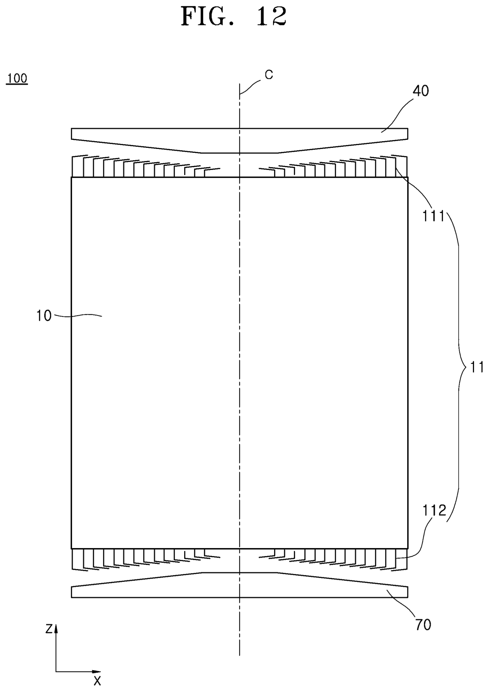

FIG. 12 is a cross-sectional view schematically illustrating an electrode assembly and current collector plates located on both sides of the electrode assembly according to some embodiments of the present disclosure.

A rechargeable battery 100 according to some embodiments of the present disclosure (e.g., including the rechargeable battery 100 described with reference to FIGS. 1 to 4) includes an electrode assembly 10 (e.g., including the electrode assembly 10 described with reference to FIGS. 1 to 7) formed by being wound around a core portion c, and current collector plates 40 and 70 (e.g., including the current collector plates 40 and 70 described with reference to FIGS. 1 to 4 and the current collector plate 40 described with reference to FIGS. 7 to 10) located on both sides of the electrode assembly 10 and electrically connected to the electrode assembly 10.

The current collector plates 40 and 70 include a first current collector plate 40 and a second current collector plate 70. In describing the current collector plates 40 and 70, overlapping content with what has been described with reference to FIGS. 1 to 4 or FIGS. 7 to 11 may be omitted.

The electrode assembly 10 includes electrodes, including a first electrode and a second electrode, and a separator disposed between the first electrode and the second electrode. The first electrode is a positive electrode or a negative electrode. The second electrode is a negative electrode or a positive electrode. The first electrode and the second electrode have different polarities.

The first electrode includes a first coated portion and a first uncoated portion 111 that extends from one side of the electrode assembly 10, and the second electrode includes a second coated portion and a second uncoated portion 112 that extends from the other side of the electrode assembly 10.

As illustrated in FIG. 12, the first uncoated portion 111 and the second uncoated portion 112 may extend in different directions. The first uncoated portion 111 may extend upward or downward from the electrode assembly 10. In addition, the second uncoated portion 112 may extend downward or upward from the electrode assembly 10. The second uncoated portion 112 may extend in a direction opposite to that in which the first uncoated portion 111 extends. The first and second uncoated portions 111 and 112 may be bent toward the core portion c through a pressing process.

The current collector plates include the first current collector plate 40 and the second current collector plate 70.

The first current collector plate 40 is joined to the bent first uncoated portion 111. Accordingly, the first current collector plate 40 is located on a side on which the first uncoated portion 111 extends. For example, when the first uncoated portion 111 extends upward from the electrode assembly 10, the first current collector plate 40 is located above the electrode assembly 10.

The second current collector plate 70 is joined to the bent second uncoated portion 112. Accordingly, the second current collector plate 70 is located on a side on which the second uncoated portion 112 extends. For example, when the second uncoated portion 112 extends downward from the electrode assembly 10, the second current collector plate 70 is located below the electrode assembly 10.

As described in FIGS. 7 to 11, the first current collector plate 40 and/or the second current collector plate 70 may be formed with non-uniform thicknesses depending on a position of the first current collector plate 40 and/or a position of the second current collector plate 70. The first current collector plate 40 may be thicker in a region closer to the core portion c than in a region farther from the core portion c. Further, the second current collector plate 70 may be thicker in a region closer to the core portion c than in a region farther from the core portion c. As described above, central portions of the first and second current collector plates 40 and 70 may be thicker than their outer portions, thereby improving adhesion to the first and second uncoated portions 111 and 112, respectively.

Accordingly, in the rechargeable battery 100 according to some embodiments of the present disclosure, adhesion between the current collector plates 40 and 70 and the uncoated portions 11 may be improved, and bonding defects between the current collector plates 40 and 70 and the uncoated portions 11 may be reduced.

However, some embodiments of the present disclosure is not limited thereto. For example, unlike what is shown in FIG. 12, one of the first and second current collector plates 40 and 70 may be formed with a uniform thickness. The first current collector plate 40 may be formed in the geometry shown in FIGS. 7 to 9, and the second current collector plate 70 may be formed in the geometry of a disk having a uniform thickness.

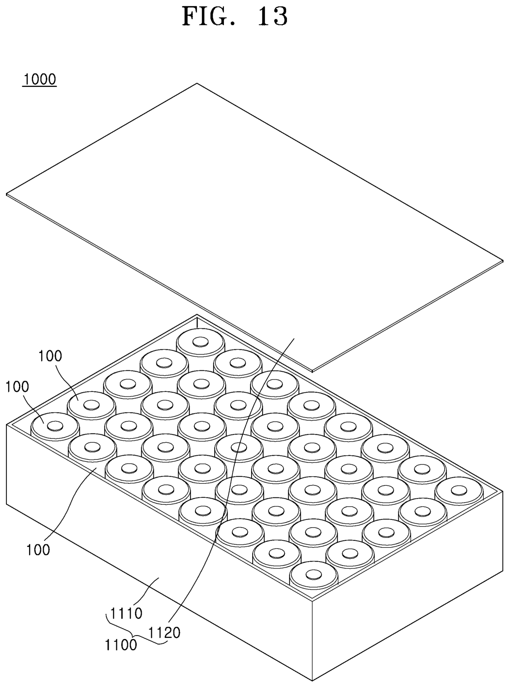

FIG. 13 is a perspective view schematically illustrating a configuration of a battery pack according to some embodiments of the present disclosure.

A battery pack 1000 according to some embodiments of the present disclosure includes a plurality of rechargeable batteries 100 (e.g., each including the rechargeable battery 100 described with reference to FIGS. 1 to 4), and a housing 1100 configured to accommodate the plurality of rechargeable batteries 100.

The housing 1100 forms a schematic exterior of the battery pack 1000 and may provide a space in which the rechargeable batteries 100 may be accommodated.

The housing 1100 may include a housing body 1110 and a cover 1120.

The housing body 1110 may have a box geometry, with an empty interior and one open side. A cross-sectional geometry of the housing body 1110 is not limited to the quadrangular geometry shown in FIG. 13 and may be changed in design to have various geometries such as another polygonal geometry, a circular geometry, and an oval geometry.

The cover 1120 may be coupled to the housing body 1110 and may close an internal space of the housing body 1110. As an example, the cover 1120 may have a substantially plate geometry and may face the open side of the housing body 1110. The cover 1120 may be fixed to the housing body 1110 by various types of coupling methods such as bolting, welding, and fitting.

The rechargeable battery 100 may function as a unit structure, which stores and supplies power, in the battery pack 1000.

The plurality of rechargeable batteries 100 may be provided. The plurality of rechargeable batteries 100 may be disposed in the housing 1100 to form various patterns, such as a grid geometry and a zigzag geometry. The plurality of rechargeable batteries 100 may be arranged side by side. The number of rechargeable batteries 100 may be variously changed in design depending on the size, geometry, or the like of the housing 1100.

With reference to FIGS. 1 to 11, each of the plurality of rechargeable batteries 100 may include an electrode assembly 10 formed by being wound around a core portion c, and a current collector plate 40 located on at least one side of the electrode assembly 10 and electrically connected to the electrode assembly 10, wherein the current collector plate 40 includes a first region 41 corresponding to the core portion c and formed with a first thickness t1, and a second region 42 corresponding to an outer portion e of the electrode assembly 10 and formed with a second thickness t2 that is less than the first thickness t1.

The electrode assembly 10 includes electrodes including a first electrode and a second electrode, and a separator located between the first electrode and the second electrode, wherein each of the electrodes includes a coated portion in which a coating layer is provided on a substrate, and an uncoated portion 11 in which the substrate is exposed and which extends from at least one side of the electrode assembly 10, and the uncoated portion 11 is bent and joined to the current collector plate 40.

A sum of a height of the uncoated portion 11 and a thickness of the current collector plate 40 yields a same value at any point along a direction from the core portion c toward the outer portion e of the electrode assembly 10.

With this structure, some embodiments of the present disclosure may provide the battery pack 1000 with improved stability.

According to the present disclosure, a rechargeable battery in which adhesion between an electrode assembly and a current collector plate is improved and/or a battery pack including the rechargeable battery can be provided.

According to the present disclosure, a rechargeable battery in which a welding defect between an electrode assembly and a current collector plate is reduced and/or a battery pack including the rechargeable battery can be provided.

According to the present disclosure, a rechargeable battery, in which a current collector plate is able to be self-aligned on an electrode assembly, and/or a battery pack including the rechargeable battery can be provided.

According to the present disclosure, a rechargeable battery in which positional misalignment of a current collector plate is minimized and/or a battery pack including the rechargeable battery can be provided.

According to the present disclosure, a rechargeable battery in which welding conditions between an electrode assembly and a current collector plate are simplified and/or a battery pack including the rechargeable battery can be provided.

According to the present disclosure, a battery pack with improved stability can be provided.

However, it will be appreciated by persons skilled in the art that the effects that can be achieved through the present disclosure are not limited to what has been described hereinabove and other advantages of the present disclosure may be understood by one skilled in the art.

While the above invention has been described with reference to the exemplary embodiments illustrated in the accompanying drawings, it should be understood that the invention is not limited to the disclosed embodiments but is intended to cover various modifications and equivalent arrangements that may be made by one skilled in the art.

## Claims

1. A rechargeable battery (100) comprising:
an electrode assembly wound around a core portion; and
a current collector plate (40, 70) located on at least one side of the electrode assembly (10) and electrically connected to the electrode assembly (10), the current collector plate (40, 70) comprising:
a first region (41) in line with the core portion and having a first thickness; and
a second region (42) in line with an outer portion of the electrode assembly (10) and having a second thickness that is less than the first thickness.

2. The rechargeable battery (100) of claim 1, wherein the electrode assembly (10) comprises:
a first electrode;
a second electrode; and
a separator located between the first electrode and the second electrode, and
wherein each of the first electrode and the second electrode comprises:
a coated portion in which a coating layer is provided on a substrate; and
an uncoated portion (11, 111, 112) in which the substrate is exposed, the uncoated portion (11, 111, 112) extending from at least one side of the electrode assembly (10).

3. The rechargeable battery (100) of claim 2, wherein a sum of a thickness of the uncoated portion (11, 111, 112) that is bent and joined to the current collector plate (40, 70) and a thickness of the current collector plate (40, 70) is constant along a direction from the core portion to the outer portion of the electrode assembly (10).

4. The rechargeable battery (100) of claim 2 or claim 3, wherein the first electrode comprises a first coated portion and a first uncoated portion extending from one side of the electrode assembly (10),
wherein the second electrode comprises a second coated portion and a second uncoated portion (111, 112) extending from another side of the electrode assembly (10), and
the current collector plate (40, 70) comprises a first current collector plate (40) located on a first side of the electrode assembly (10) and joined to the first uncoated portion, which is bent and a second current collector plate (70) located on a second side of the electrode assembly (10) and joined to the second uncoated portion (111, 112), which is bent.

5. The rechargeable battery (100) of any one of the preceding claims, wherein the second thickness is 20% to 90% of the first thickness.

6. The rechargeable battery (100) of any one of the preceding claims, wherein the first thickness is 0.5% to 2.5% of a width of the current collector plate (40, 70).

7. The rechargeable battery (100) of any one of the preceding claims, wherein the first thickness is greater than or equal to 0.1 mm and less than or equal to 0.5 mm and the second thickness is greater than or equal to 0.2 mm and less than or equal to 0.45 mm.

8. The rechargeable battery (100) of any one of the preceding claims, wherein the first region (41) and the second region (42) are connected such that the first region (41) and second region (42) form a seamless geometry.

9. The rechargeable battery (100) of any one of the preceding claims, wherein the first region (41) and the second region (42) are connected to each other and form a step.

10. The rechargeable battery (100) of any one of the preceding claims, wherein the current collector plate (40, 70) is formed by stacking a plurality of plates.

11. The rechargeable battery (100) of claim 10, wherein the plurality of plates comprises:
a first plate; and
a second plate having a larger area than the first plate.

12. The rechargeable battery (100) of claim 11, wherein the first plate is joined to the second plate by welding.

13. The rechargeable battery (100) of claim 11 or claim 12, wherein the plurality of plates comprises n plates located between the first plate and the second plate, and
wherein n is a natural number greater than or equal to 1 and less than or equal to 8.

14. The rechargeable battery (100) of claim 13, wherein a thickness of at least one of the plates is the second thickness.

15. A battery pack (1000) comprising:
a plurality of rechargeable batteries (100); and
a housing (1100) accommodating the plurality of rechargeable batteries (100),
wherein each of the rechargeable batteries (100) comprises the rechargeable battery (100) according to claims 1 to 14.
